# EUROPEAN PATENT APPLICATION

(11) **EP 4 693 143 A1**
(43) Date of publication of application: **11.02.2026**
(21) Application number: 23930162.5
(22) Date of filing: 29.03.2023
(51) Int. Cl.: G06Q 20/38

(54) **METHOD FOR SECURE UPDATING OF PAYMENT MEANS TOKENS**

(71) Applicant: Memewallet Card-Dynamics, S.L., 28290 Las Rozas Madrid (ES); Seglan, S.L., 28034 Madrid (ES)
(72) Inventor: CANTERO BRANDES, Mario, 28290 LAS ROZAS Madrid (ES); GARCÍA MURGA, Imanol, 28034 MADRID Madrid (ES)
(74) Representative: Ungria López, Javier
(86) International application number: PCT/ES2023/070202
(87) International publication number: WO 2024/200882

(57) **Abstract**

The invention relates to a method for securely updating payment means tokens, comprising: capturing (16) data of a payment means (7) and holder (2); sending (17) a request for a brand token (9) to a cloud system (1), including holder identifying information (2); checking (18) whether the holder identifying information exists in a database (5) of the cloud system; if it exists, then: (i) searching the database, for associations (5') comprising brand tokens, merchants, payment means and holder identifying information; (ii) providing (19) the associations and a list of update options; requesting (20) a new brand token for the associations from a means of payment issuer (4) via the cloud system; sending (21, 22) the new brand token to the merchants (3, 3') for each of the associations.

## Description

### OBJECT OF THE INVENTION

The present invention relates to a method for secure updating of payment means tokens. Specifically, the present invention aims to update a user's payment means across all the players involved (users, means of payment issuers, merchants), while maintaining the security of the payment means.

The invention is particularly applicable in the field of telecommunication techniques, virtual security, authentication and protection of privacy and anonymity.

### BACKGROUND OF THE INVENTION AND TECHNICAL PROBLEM TO BE RESOLVED

In the current state of the art, the token (defined in the next paragraph) has become the basic element for account access and, therefore, for payments to be made by a merchant to an account-holding customer. It is therefore essential for the merchant, since if they do not have this information correctly, they will not be able to make payments to their customer, which will reduce their business and may additionally cause them to incur penalties. Furthermore, it is important for the customer, since if this information is not updated, they may find themselves without the good or service they wanted to obtain from their merchant. Since their inception as a technology, tokens have been generated and maintained as a proprietary element of the merchant or acquirer, allowing them to have a barrier allowing the merchant to abandon their service, while maintaining little transparency about the feasibility of proprietary token import and export processes. Recently, card brands led by Visa have taken a step forward and started to manage brand tokens from both the issuing end and the acquiring end. What is relevant in the context of the present invention is that the merchant now has the opportunity to have a brand token with which they can offer new payment operations to their customers while maintaining the level of security. The essential point in the service for merchants is to ensure the automated life cycle of the brand token because in this way they will be able to optimise their operations and offer their customers the best possible experience. The present invention therefore focuses on maintaining this automated life cycle even in the event of account replacement by the customer.

In the state of the art, "token" is known as a digital representation of a piece of data existing in the real world that allows it to be masked using various mechanisms that ultimately allow the real piece of data not to be compromised. Therefore, "tokenising" information can reduce the risk of fraud, because unlike real information, a "token" is a perishable element that can be replaced either periodically or at any sign of compromise of its security. Although tokens minimise risk, an attacker can potentially capture a token and may attempt to reuse it fraudulently.

In the state of the art, the "Brand token" is known as the digital representation generated by a payment card issuer ("brand") (Visa, MasterCard, etc.) on the basis of the PAN ("Personal Account Number") of the actual plastic payment card. Generating and managing the "Brand token" is exclusively the responsibility of the payment card brand itself.

In the state of the art, and for the present technical sector, the "MainID" is known as the token of a static information element of a natural and/or legal person that does not change over time. In this sense, a personal identification number ("ID"), passport, driving licence number, social security number, etc. can act as a "MainID".

"Tokens" as digital information elements can be and are widely used to protect sensitive personal information related to payment means and any other type of personal information that can be substituted with tokens in the digital world.

Currently, each user/customer has a set of personal data such as name, ID card, passport, taxpayer ID, etc., or address number, telephone, e-mail, etc., which are tokenised at each merchant together with the information of their preferred payment means with which they have a "proprietary token" or "brand token" that they can use to simply and automatically carry out future purchases and payments of this user, as well as recurring payments initiated without the need for the user's presence and in a secure manner. This set of data has time-invariant data and time-varying or time-substitutable data. The common practice in the tokenisation of payment means (bank card) data by service providers to merchants (non-Brand token) is normally limited to said card data, not including other data of the holder of the payment means (bank card).

Due to the tokenisation of the payment means in order to maintain the security thereof, the process of updating the payment means in the state of the art is solely controlled by the issuer of the payment means as the only entity able to generate and manage the brand token.

The problem is when the user together with their payment means, which is registered at various merchants, updates the payment means. In particular, if the token of concern is the token of the payment means that the user has registered at the merchant, this is the brand token for that user and at the merchant in question. When the payment means is updated, the problem for the set of merchants that have stored the user's brand token information for each of the merchants to which it is related is the loss of connection with this customer, and ultimately the loss of business that it may entail, or the loss of usability and availability for the user. This is because the brand token is encrypted information representing the user's payment means, the user and the merchant.

In the state of the art, the registration of the payment means that the user wants to carry out involves a series of steps that are exchanged in an interconnected environment comprising the user, a merchant, a cloud system and a means of payment issuer ("brand"), such that:
- the merchant captures the data of the payment means (bank card) that the customer of the merchant wants to associate for their payments;
- the merchant uses its own interface with the cloud system to request a brand token of the card. This request includes only information on the payment means (bank card);
- the system requests a token for the card from the brand and forwards it to the merchant.

And when an upgrade is to be carried out:
- the means of payment issuer informs the cloud system of changes to the expiry date or the deletion of a token;
- the cloud system notifies the merchant of the change of expiry date or the deletion of a token.

In other words, due to the encryption (tokenisation) required for payment means, the payment means can only be updated when the "new" payment means belongs to the same provider as the "old" payment means to be updated and only for a single merchant, since each generated Brand token only includes one merchant per user.

Therefore, there is a need in the state of the art to be able to update an encrypted (tokenised) payment means across all players in the environment when one of the players wishes to update the payment means, without compromising the security of the encrypted payment means.

### DESCRIPTION OF THE INVENTION

The present invention is framed within an environment with the following players:
- Customer of the merchant holding a payment account whether in the form of a card or in any other form;
- Merchant, central to the benefit of the present invention, and which is provided with an automated way of maintaining brand tokens to optimise its operations;
- Account/card issuers, such as providers of the payment account to customers to enable them to manage their payments at merchants;
- Brand, as a provider of the brand token to the holder-merchant;
- The present invention, as an intermediary between merchants and brands, but to which additionally both account/card issuers and customers themselves can connect directly or indirectly to maintain the automated management of the life cycle of their brand token in their merchants, thus avoiding any type of interruption in the supply of the good or service provided by the merchant.

The present specification relates to the "brand token", in which one of the pieces of invariable data (Name, ID, Passport, etc.) that the "brand token" has encrypted is the "MainID" of the user on the different websites in which they register variable personal information. The brand token is designed so that, in the world of tokens created by merchants' means of payment issuers, events that would require a replacement due to card expiry, theft, loss, damage, etc., do not require replacement (they change card data but not the underlying account), since brand tokens have the ability to represent the old card and the new card precisely to avoid the need for replacement. This MainID is typically shared by the set of websites (merchants) associated with the system and it is the point of confluence of the additional set of data that each website (merchant) may collect according to its specific business or activity. This implies that a single customer can have "n" elements of information typically represented as tokens in the "n" merchants with which they usually interact and that the information stored in them corresponds faithfully to the reality of the moment in time when the information was recorded.

Therefore, the present invention allows the updating of a "brand token", and its transparent replacement and substitution on the "n" websites (merchants) associated with the system.

In a first aspect of the invention, a system for securely updating payment means tokens is disclosed. The system of the present invention comprises a merchant, a cloud system and a means of payment issuer. The cloud system has at least one database that stores the associated MainID, brand token, payment means (card) and merchant(s). The system of the present invention may also comprise an interface with which the user and/or the merchant(s) communicate with the cloud system. The interface, the cloud system and the means of payment issuer can be interconnected by means of encryption protocols. The encryption protocol can be selected from TLS1.2 and TLS1.3.

In a second aspect of the invention, a method for secure updating of payment means tokens is disclosed. The method for securely updating payment means tokens comprises the following steps:
- capturing data of a payment means and of a holder of the payment means;
- sending a request for a brand token for the payment means to a cloud system via an interface connected to the cloud system, wherein the request includes at least one piece of identifying information of the holder of the payment means ("MainID");
- checking whether the identifying information of the holder of the payment means ("MainlD") exists in a database contained in the cloud system;
- if the identifying information of the holder of the payment means ("MainlD") exists in the database, then:
   ∘ searching the database for associations comprising brand tokens, merchants, payment means and identifying information of the holder of the payment means ("MainID");
   ∘ providing, via the interface, the associations together with a list of update options calculated on the basis of default management criteria and the associations found.

In any case, whether or not the identifying information of the holder of the payment means exists:
- requesting a new brand token for each of the associations from a means of payment issuer via the cloud system;
- sending the new brand token to the respective merchants via the cloud system and for each of the associations (to be used for successive purchases - the brand token is new if it is the first time; updated if it existed previously).

In one embodiment of the invention, the method of the present invention further comprises updating the associations with the new brand token(s) in the database.

In one embodiment of the invention, the list of update options comprises:
- updating all the brand tokens with the payment means;
- updating the brand tokens selected by the holder of the payment means;
- not updating any brand tokens.

In one embodiment of the invention, the identifying information of the holder of the payment means is the "MainID".

In one embodiment of the invention, the method of the present invention further comprises enabling the holder of the payment means to use the interface via a personal blockchain ID.

In one embodiment of the invention, the method of the present invention further comprises enabling the merchant to use the interface via encrypted authentication.

In one embodiment of the invention, the method of the present invention further comprises enabling an external data source communicated with the cloud system to use the interface via encrypted authentication.

### BRIEF DESCRIPTION OF THE FIGURES

To complete the description of the invention and help make its features more readily understandable, according to a preferred exemplary embodiment of the same, a set of drawings is attached wherein, for illustrative and non-limiting purposes, the following figures are represented:
Figure 1 depicts a diagram showing the interactions between different entities to carry out the registration and updating of a payment means according to the state of the art.
Figure 2 depicts a diagram showing the interactions between different entities to carry out the method for secure updating of payment means tokens according to the present invention.

A list of the references used in the figures is given below:
1. Cloud system;
2. User/holder of the payment means;
3. Merchant; 3': merchants;
4. Means of payment issuer;
5. Database of the cloud system; 5': associations;
6. External data source;
7. Payment means - Bank Card;
8. Interface;
9. Brand token;
10 to 15: steps of the method for updating payment means according to the state of the art;
16 to 22: steps of the method for updating payment means of the present invention.

### DESCRIPTION OF A PREFERRED EMBODIMENT OF THE INVENTION

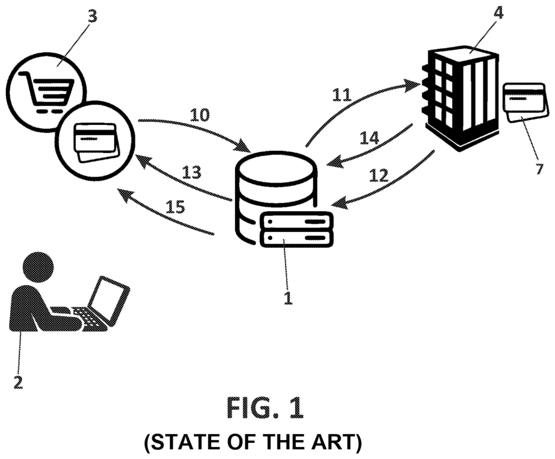

Figure 1 depicts a diagram showing the interactions between different entities to carry out the registration of a payment means according to the state of the art. The registration of the payment means that the user wants to carry out involves a series of steps that are exchanged in an interconnected environment comprising the user 2, the merchant 3, the cloud system 1 and the means of payment issuer 4, such that:
- the merchant captures the data of the payment means 7 (bank card) that the customer 2 of the merchant 3 wants to associate for their payments; the merchant 3 uses its own interface with the cloud system 1 to request 10 a brand token of the payment means 7. This request includes only information on the payment means (bank card);
- the cloud system 1 requests 11 a brand token for the card 7 from the means of payment issuer 4, the means of payment issuer 4 sends 12 the brand token to the cloud system and said cloud system forwards 13 the brand token 9 to the merchant 3.

And when an update is to be carried out according to the state of the art:
- the means of payment issuer 4 informs 14 the cloud system 1 of changes to the expiry date or the deletion of a brand token; and,
- the cloud system 1 notifies 15 the merchant 3 of the change of expiry date or the deletion of a brand token 9.

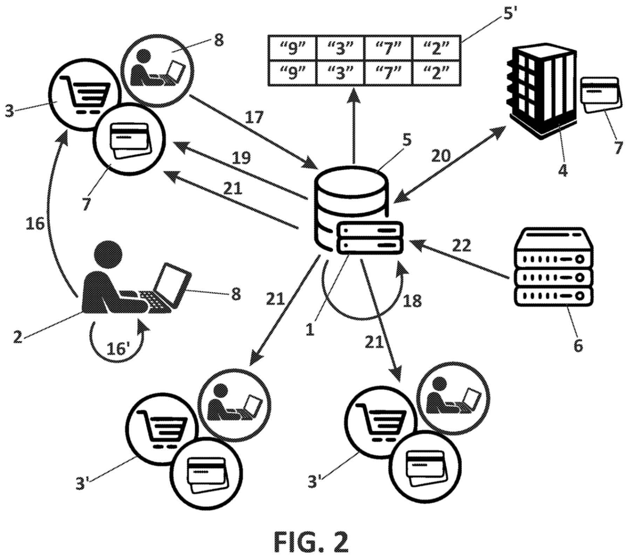

Furthermore, Fig. 2 depicts a diagram showing the interactions between the different entities to carry out the registration and secure updating of payment means tokens according to the method of the present invention. Therefore, Fig. 2 shows the system of the present invention made up of the interface 8, the cloud system 1 and the means of payment issuer 4. The cloud system 1 has the database 5 that stores the data associations 5'. Each association 5' is made up of the brand tokens 9, the merchants 3, the payment means 7 and the user's MainID 2. In other words, the database 5 stores all the brand tokens 9, the merchants 3 and payment means 7 that correspond to one same user/holder of the payment means 2 identified by the corresponding MainID. Optionally, the system of the present invention may additionally comprise the external data source 6. The cloud system 1, the interface 8 (used by the merchant or by the user), the means of payment issuer 4 and the external data source 6 have the MainID of the user/holder of the payment means, which allows the registration and updating of the brand tokens regardless of whether there is one or more means of payment issuer(s), or whether the updating of the brand tokens is initiated by the user 2, the merchant 3, the means of payment issuer(s) 4 or the external data source 6, if any.

The registration or updating of the brand tokens initiated by the user 2 can be carried out by means such as an application (interface 8) from a smartphone belonging to the user via secure authentication. In this case, the user in direct communication with the cloud system 1 updates the payment means to be replaced. The cloud system 1 evaluates the update and proceeds to determine the merchants in which the brand token 9 should be updated and how this should be done. For this purpose, the cloud system 1 prepares the dialogues with the means of payment issuers 4 and the dialogues with the merchants for secure, confidential and transparent distribution to the relevant merchants according to the update options desired by the user 2.

With respect to the method for secure updating of payment means tokens of the present invention, Fig. 2 shows that the merchant 3 captures 16 the data of the payment means (bank card) and of the user/holder 2 of the payment means, or the very user 2 modifies/includes 16' the same data by accessing the merchant 3. The merchant 3 sends 17 a request for a brand token 9 for the payment means 7 to the cloud system 1 via the interface 8 connected to the cloud system 1. The request includes at least the MainID identifying the holder of the payment means 7. The cloud system 1 checks 18 whether the MainID of the user 2 exists in the database 5 contained in the cloud system 1. If the MainID of the user 2 exists in the database 5, then:
∘ for the MainID of the user 2, the cloud system 1 searches the database for all its associations 5', which are made up of the brand tokens, the merchants and the payment means for the MainID of the user 2;
∘ the cloud system 1 sends 19 the associations to the merchant 3 so that they can be provided to the merchant 3 or to the user 2, via the interface 8, together with a list of update options calculated on the basis of default management criteria and the associations 5' found; the user 2 or the merchant 3 will reply by choosing the desired options.

Whether or not the MainID exists in the database 5, for each update of an association 5' or for the creation of a new association 5', the cloud system 1 requests 20 a new brand token from the means of payment issuer 4, said token being sent 20 from the means of payment issuer 4 to the cloud system 1. The cloud system 1 updates the association with the new brand token 9 associated with the changes in the means of payment (new bank card, change of expiry date, etc.). Lastly, the cloud system 1 sends 21 the new brand token 9 to all merchants (to be used in successive purchases) listed in the associations 5'. In other words, the cloud system 1 sends 21 the new brand tokens representing the updated payment means to all the merchants (3,3') where the user has their payment means registered.

The entire updating process described above is equally fulfilled when instead of being initiated by the merchant 3 or by the user 2, said update is initiated 22 by the external source 6, which can be a bank, official bodies, trusted websites, etc.

## Claims

1. A method for secure updating of payment means tokens, **characterised in that** it comprises:
• capturing (16) data of a payment means (7) and of a holder of the payment means (2);
• sending (17) a request for a brand token (9) for the payment means (7) to a cloud system (1) via an interface (8) connected to the cloud system (1), wherein the request includes at least one piece of identifying information of the holder of the payment means (2);
• checking (18) whether the identifying information of the holder of the payment means (2) exists in a database (5) contained in the cloud system (1);
• if the identifying information of the holder of the payment means exists in the database (5), then:
∘ searching the database for associations (5') comprising brand tokens, merchants, payment means and identifying information of the holder of the payment means;
∘ providing (19), via the interface, the associations (5') together with a list of update options calculated on the basis of default management criteria and the associations (5') found;
• requesting (20) a new brand token (9) for each of the associations (5') from a means of payment issuer (4) via the cloud system;
• sending (21,22) the new brand token to the respective merchants (3,3') via the cloud system and for each of the associations.

2. The method of claim 1, **characterised in that** it further comprises updating the associations with the new brand token in the database.

3. The method of claim 1, **characterised in that** the list of update options comprises:
• updating all the brand tokens with the payment means;
• updating the brand tokens selected by the holder of the payment means;
• not updating any brand tokens.

4. The method of claim 1, **characterised in that** the identifying information of the holder of the payment means is the MainlD.

5. The method of claim 1, **characterised in that** it comprises enabling the holder of the payment means to use the interface via a personal blockchain ID.

6. The method of claim 1, **characterised in that** it comprises enabling the merchant to use the interface via encrypted authentication.

7. The method of claim 1, **characterised in that** it comprises enabling an external data source communicated with the cloud system to use the interface via encrypted authentication.

8. A system for securely updating payment means tokens, **characterised in that** it comprises at least one interface (8), a cloud system (1) and a means of payment issuer (4), wherein the cloud system (1) comprises at least one database (5) that stores associations (5') comprising brand tokens (9), merchants (3,3') and identifying information of holders of the payment means (2).

9. The system of claim 8, wherein the interface, the cloud system and the means of payment issuer are interconnected by means of encryption protocols.

10. The system of claim 9, wherein the encryption protocol is selected from TLS1.2 and TLS1.3.
